# FASCICULE DE BREVET EUROPEEN

(11) **EP 2 614 406 B1**
(45) Date de publication et mention de la délivrance du brevet: **30.07.2014**
(21) Numéro de dépôt: 11761649.0
(22) Date de dépôt: 08.09.2011
(51) Int. Cl.: H04N 5/232, H04N 5/225, G03B 37/04

(54) **DISPOSITIF OPTIQUE POUR LA CAPTURE D'IMAGES SELON UN CHAMP DE 360 °**
OPTISCHE VORRICHTUNG ZUR BILDAUFNAHME GEMÄSS EINEM 360°-FELD
OPTICAL DEVICE FOR CAPTURING IMAGES ACCORDING TO A 360° FIELD

(30) Priorité: 09.09.2010 FR 1003599
(43) Date de publication de la demande: 17.07.2013
(73) Titulaire: Giroptic, 59000 Lille (FR)
(72) Inventeur: OLLIER, Richard, F-59000 Lille (FR); COSTA, José, F-59000 Lille (FR)
(74) Mandataire: Bureau Duthoit Legros Associés
(86) Numéro de dépôt international: PCT/FR2011/000495
(87) Numéro de publication internationale: WO 2012/032236

(56) Documents cités:
- EP-A2- 0 989 436
- EP-A2- 1 231 780
- JP-A- 9 093 471
- JP-A- 2001 204 015
- US-A- 5 023 725

## Description

L'invention est relative à un dispositif optique pour la capture d'images selon un champ de 360°, par recollement numérique de trois images.

Dans le domaine de la capture d'images, il est connu d'acquérir un champ de 360° par juxtaposition et recollement numérique de plusieurs images obtenues à l'aide de plusieurs optiques.

On connaît ainsi des caméras comprenant plusieurs optiques réparties autour d'une sphère et permettant l'acquisition d'images suivant différents angles de vue.

De telles caméras sont par exemple utilisées, fixées à des véhicules, pour filmer rues et autres lieux lors de la conduite. Une telle caméra connue comprend onze optiques régulièrement réparties sur une sphère pour l'acquisition d'images suivant onze points de vue. Ces onze images peuvent ensuite être juxtaposées et subir un traitement numérique afin de reconstituer le champ optique suivant 360°.

Une telle caméra a prouvé son efficacité lors de la création de plans, mais est, de par son encombrement et son coût, peu adaptée pour d'autres applications grand public.

Le but de la présente invention est de pallier les inconvénients précités en proposant un dispositif pour la capture d'images selon un champ de 360°, particulièrement peu encombrant et à faible coût de revient.

Un autre but de l'invention est de proposer une telle caméra à plusieurs optiques permettant une bonne juxtaposition des images prises lors de l'étape de recollement numérique.

Un autre but de l'invention est de proposer un dispositif, portatif, simple d'utilisation.

D'autres buts et avantages de la présente invention apparaîtront au cours de la description qui va suivre, qui n'est donnée qu'à titre indicatif et qui n'a pas pour but de la limiter.

Aussi l'invention concerne un dispositif optique pour la capture d'images, selon un champ de 360°, par recollement numérique de trois images, comprenant trois optiques d'axe longitudinal pour les acquisitions respectives desdites trois images, chaque groupe optique présentant une lentille de tête suivie, sur le même axe longitudinal dudit groupe optique, de plusieurs lentilles afin de projeter les rayons transmis vers un capteur d'images, lesdits trois groupes étant enchevêtrés entre eux autour d'un axe de rotation fictif pour ces derniers, et dans lequel dans la direction dudit axe de rotation fictif les groupes optiques se positionnent en recouvrement selon une configuration géométrique au triangle, l'axe longitudinal de chaque groupe optique étant incliné par rapport à un plan orthogonal audit axe de rotation fictif de telle façon à permettre l'enchevêtrement desdits groupes optiques.

L'invention sera mieux comprise à la lecture de la description accompagnée des figures en annexe parmi lesquelles :

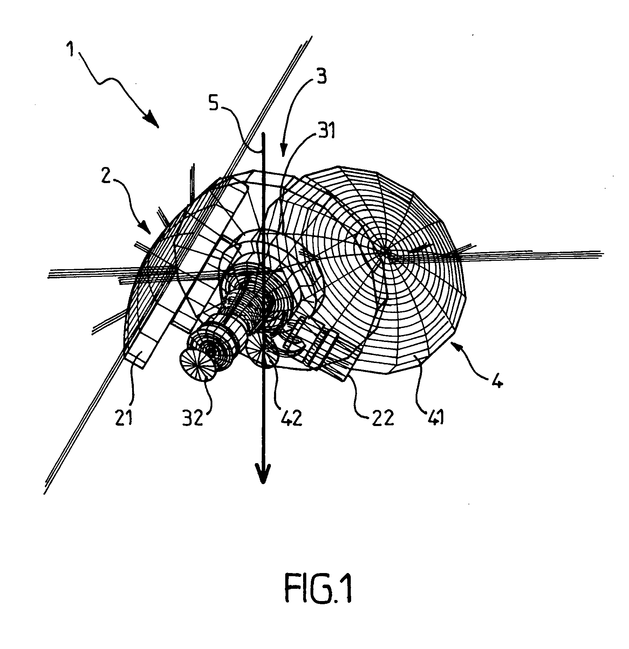

La figure 1 est une vue d'un assemblage d'optiques d'un dispositif conforme à l'invention selon un mode de réalisation.
La figure 2 est une vue de dessus de l'assemblage d'optiques tel qu'illustré à la figure 1.
La figure 3 est une vue du dispositif tel qu'illustré à la figure 1, l'assemblage d'optiques étant logé dans un boîtier reposant par l'intermédiaire d'une face plane sur une surface horizontale en positionnant l'axe de rotation fictif à la verticale.

Aussi l'invention concerne un dispositif 1 optique pour la capture d'images, selon un champ de 360°, par recollement numérique de trois images. Le dispositif optique comprend ainsi trois groupes optiques 2, 3, 4, d'axe longitudinal 20, 30, 40 pour les acquisitions respectives desdites trois images.

Chaque groupe optique 2, 3, 4 présente une lentille de tête 21, 31, 41, suivie sur le même axe longitudinal 20, 30, 40 du groupe optique de plusieurs lentilles 211, 311, 411 afin de projeter les rayons transmis vers un capteur d'images 22, 32, 42. Les capteurs d'images peuvent être des capteurs numériques, notamment CDD, par exemple à 7 millions de pixels.

Avantageusement, les trois groupes optiques sont enchevêtrés entre eux autour d'un axe de rotation fictif 5 pour lesdits groupes, l'axe longitudinal 20, 30, 40 de chaque groupe optique étant incliné par rapport à un plan orthogonal audit axe de rotation fictif 5 de telle façon à permettre l'enchevêtrement des groupes optiques.

Par axe de rotation fictif, on entend le fait que la position de l'un des trois groupes optiques 2, 3, 4 peut être obtenue à partir de l'un des deux autres groupes optiques du dispositif après une transformation de rotation dans l'espace ayant pour axe ledit axe de rotation fictif 5.

Selon l'invention, il est ainsi possible de reconstituer, par juxtaposition de trois images, le champ optique sur 360°. A cet effet, seulement les trois groupes optiques du dispositif sont nécessaires.

Avantageusement, l'enchevêtrement permet de rapprocher entre elles ces optiques, et ainsi de rapprocher entre eux les points nodaux de chaque optique, permettant une meilleure juxtaposition des trois images lors de l'étape de recollement.

Le champ peut être ainsi collecté à 360° autour dudit axe fictif 5, l'élévation du champ optique pouvant s'étendre entre un angle strictement négatif α₁, tel que par exemple -20° et un angle strictement positif α₂, tel que par exemple +70°.

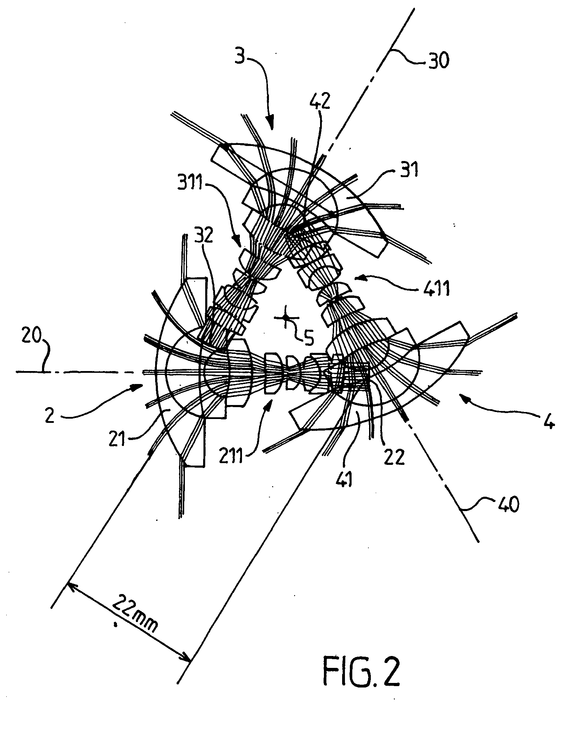

La lentille de tête 21, 31, 41 par laquelle entre la lumière peut être une lentille grand angle, telle qu'illustrée à la figure 2 notamment. Cette lentille est suivie de plusieurs lentilles qui peuvent permettre de projeter les rayons transmis vers le capteur d'images 22, 32, 42, en limitant à la distance entre la lentille de tête 21, 31, 41 et le capteur d'images 22, 32, 42. En outre, ces lentilles 211, 311, 411 peuvent être choisies afin de corriger l'astigmatisme et la courbure de champ.

Telles qu'illustrées selon la figure 2, les positions relatives des trois groupes optiques 2, 3, 4 peuvent être obtenues par des rotations successives de 120°, suivant ledit axe de rotation fictif 5.

Cet angle d'inclinaison entre l'axe longitudinal 20, 30, 40 de chaque groupe optique 2, 3, 4 et le plan orthogonal audit axe de rotation fictif 5 peut être compris entre 15° et 30° notamment.

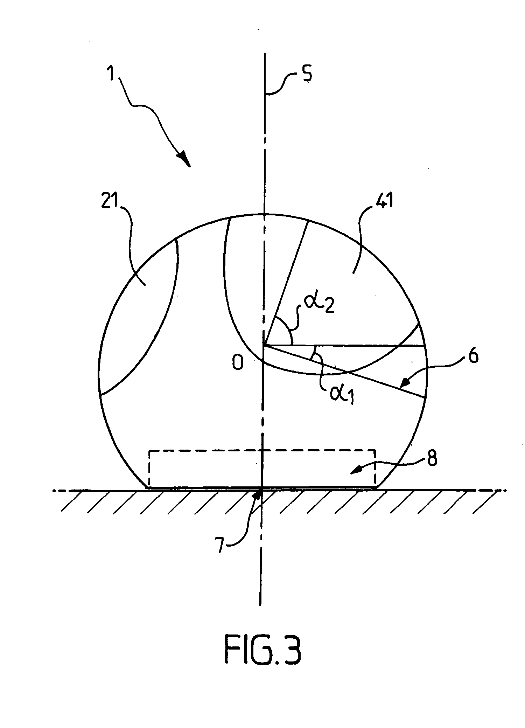

Ainsi, telle qu'illustrée aux figures, selon l'exemple, la lentille de tête 21, 31, 41 de l'un des groupes optiques 2, 3, 4 peut se positionner en recouvrement de la partie arrière d'un autre desdits groupes optiques. Vus de dessus, tels qu'illustrés à la figure 3, les trois groupes optiques présentent une configuration géométrique en triangle.

Un tel dispositif trouvera une application particulière comme dispositif portatif. A cet effet, et tel qu'illustré notamment selon l'exemple de la figure 3, ce dispositif comprend un boîtier 6 intégrant les trois groupes optiques 2, 3, 4, voire une électronique de commande 8. Ce boîtier peut en outre présenter une face du boîtier sur laquelle peut reposer ledit dispositif 1 sur une surface horizontale en positionnant ledit axe de rotation fictif 5 à la verticale. Dans cette position, les lentilles de tête 21, 31, 41 des groupes optiques 2, 3, 4 peuvent être orientées vers le haut.

Le dispositif portatif peut ainsi intégrer l'électronique de commande 8 prévue intérieure au boîtier 6, qui peut être avantageusement positionnée en dessous desdits groupes optiques lorsque le dispositif 1 repose sur ladite surface horizontale par l'intermédiaire de ladite face 7 du boîtier. Cette électronique de commande peut présenter une mémoire pour le stockage des images prises par lesdits groupes optiques 2, 3, 4, voire être alimentée par une source d'alimentation telle que piles ou batterie intégrée au boîtier.

Le dispositif peut en outre présenter une connectique, telle que notamment connectique USB, pour la transmission de données et notamment le téléchargement de données depuis l'électronique du dispositif conforme à l'invention vers un autre dispositif tel qu'un ordinateur, ou encore le téléchargement de données à partir d'un tel ordinateur vers l'électronique de commande 8 dudit dispositif.

Ladite connectique USB peut permettre, éventuellement, d'alimenter électriquement le dispositif, voire de recharger, le cas échéant, la source d'alimentation (batterie) intégrée au boîtier.

Le dispositif peut trouver une application comme webcam notamment lors d'une visioconférence. Par exemple en positionnant le dispositif au centre d'une table, il permettra de visualiser l'ensemble des intervenants présents autour de cette table.

Naturellement, d'autres modes de réalisation auraient pu être envisagés par l'homme du métier sans pour autant sortir du cadre de l'invention définie par les revendications ci-après.

## Revendications

1. Dispositif (1) optique pour la capture d'images, selon un champ de 360°, par recollement numérique de trois images, comprenant trois groupes optique (2, 3, 4) d'axe longitudinal (20, 30, 40) pour les acquisitions respectives desdites trois images, chaque groupe optique (2, 3, 4) présentant une lentille de tête (21, 31, 41) suivie, sur le même axe longitudinal (20, 30, 40) dudit groupe optique, de plusieurs lentilles (211, 311, 411) afin de projeter les rayons transmis vers un capteur d'images (22, 32, 42), lesdits trois groupes optiques (2, 3, 4) étant enchevêtrés entre eux autour d'un axe de rotation fictif (5) pour ces derniers, et dans lequel dans la direction dudit axe de rotation fictif (5), les groupes optiques se positionnent en recouvrement selon une configuration géométrique en triangle, l'axe longitudinal (20, 30, 40) de chaque groupe optique étant incliné par rapport à un plan orthogonal audit axe de rotation fictif de telle façon à permettre l'enchevêtrement desdits groupes optiques.

2. Dispositif selon la revendication 1, dans lequel les positions relatives des trois groupes optiques (2, 3, 4) sont obtenues par des rotations successives de 120°, suivant ledit axe de rotation fictif (5),

3. Dispositif selon la revendication 1 ou 2, dans lequel l'angle d'inclinaison entre l'axe longitudinal (20, 30, 40) de chaque groupe optique (2, 3, 4) et ledit plan orthogonal audit axe de rotation fictif (5) est compris entre 15° et 30°.

4. Dispositif selon l'une des revendications 1 à 3, dans lequel la lentille de tête (21, 31, 41) de l'un des groupes optiques (2, 3, 4) se positionne en recouvrement de la partie arrière d'un autre desdits groupes optiques (2, 3, 4).

5. Dispositif selon l'une des revendications 1 à 4, portatif, comprenant un boîtier (6) intégrant les trois groupes optiques (2, 3, 4) ainsi qu'une électronique de commande (8).

6. Dispositif selon la revendication 5 présentant une face (7) dudit boîtier sur laquelle peut reposer ledit dispositif (1) sur une surface horizontale en positionnant ledit axe de rotation fictif (5) à la verticale, lesdites lentilles de tête (21, 31, 41) des groupes optiques (2, 3, 4) orientées vers le haut.

7. Dispositif selon la revendication 6, dans lequel l'électronique de commande (8) est positionnée en dessous desdits groupes optiques (2, 3, 4) lorsque le dispositif (1) repose sur ladite surface horizontale par l'intermédiaire de ladite face (7) dudit boîtier.

8. Dispositif selon l'une des revendications 5 à 7, dans lequel l'électronique de commande (8) présente une mémoire pour le stockage des images prises par lesdits groupes optiques (2, 3, 4).

9. Dispositif selon la revendication 5 ou 8, dans lequel le boîtier intègre une source d'alimentation.

10. Dispositif selon l'une des revendications 5 à 9 présentant une connectique pour la transmission de données.

11. Utilisation du dispositif selon l'une des revendications 1 à 10 pour l'obtention d'images 360° par recollement numérique de trois images acquises respectivement par les trois groupes optiques (2, 3, 4) dudit dispositif (1).

12. Utilisation du dispositif selon l'une des revendications 1 à 10 comme webcam.

## Patentansprüche

1. Optische Vorrichtung (1) zur Aufnahme von Bildern gemäß einem Feld von 360° durch digitales Verbinden von drei Bildern, umfassend drei optische Gruppen (2, 3, 4) mit Längsachse (20, 30, 40) für die jeweiligen Erfassungen der drei Bilder, wobei jede optische Gruppe (2, 3, 4) eine Kopflinse (21, 31, 41) aufweist, auf derselben Längsachse (20, 30, 40) der optischen Gruppe gefolgt von mehreren Linsen (211, 311, 411), um die übertragenen Strahlen zu einem Bildsensor (22, 32, 42) zu projizieren, wobei die drei optischen Gruppen (2, 3, 4) miteinander um eine fiktive Rotationsachse (5) für diese letztgenannten verflochten sind, und wobei sich die optischen Gruppen überlappend nach einer geometrischen Dreieckskonfiguration in die Richtung der fiktiven Rotationsachse (5) positionieren, wobei die Längsachse (20, 30, 40) jeder optischen Gruppe in Bezug zu einer zur fiktiven Rotationsachse orthogonalen Ebene geneigt ist, um die Verflechtung der optischen Gruppen zu ermöglichen.

2. Vorrichtung nach Anspruch 1, bei der die relativen Positionen der drei optischen Gruppen (2, 3, 4) durch aufeinanderfolgende Rotationen um 120° entlang der fiktiven Rotationsachse (5) erhalten werden.

3. Vorrichtung nach Anspruch 1 oder 2, bei der der Neigungswinkel zwischen der Längsachse (20, 30, 40) jeder optischen Gruppe (2, 3, 4) und der Ebene orthogonal auf die fiktive Rotationsachse (5) zwischen 15° und 30° beträgt.

4. Vorrichtung nach einem der Ansprüche 1 bis 3, bei der sich die Kopflinse (21, 31, 41) einer der optischen Gruppen (2, 3, 4) überlappend zum hinteren Teil einer weiteren der optischen Gruppen (2, 3, 4) positioniert.

5. Vorrichtung nach einem der Ansprüche 1 bis 4, welche tragbar ist und ein Gehäuse (6) umfasst, das die drei optischen Gruppen (2, 3, 4) sowie eine elektronische Steuerung (8) einschließt.

6. Vorrichtung nach Anspruch 5, die eine Seite (7) des Gehäuses aufweist, auf der die Vorrichtung (1) auf einer horizontalen Fläche liegen kann, wobei die fiktive Rotationsachse (5) vertikal angeordnet und die Kopflinsen (21, 31, 41) der optischen Gruppen (2, 3, 4) nach oben gerichtet sind.

7. Vorrichtung nach Anspruch 6, bei der die Steuerelektronik (8) unter den optischen Gruppen (2, 3, 4) positioniert ist, wenn die Vorrichtung (1) auf der horizontalen Fläche mit Hilfe der Seite (7) des Gehäuses aufliegt.

8. Vorrichtung nach einem der Ansprüche 5 bis 7, bei der die Steuerelektronik (8) einen Speicher zur Speicherung der von den optischen Gruppen (2, 3, 4) aufgenommenen Bilder aufweist.

9. Vorrichtung nach Anspruch 5 oder 8, bei der das Gehäuse eine Versorgungsquelle einschließt.

10. Vorrichtung nach einem der Ansprüche 5 bis 9, die ein Anschlusssystem für die Datenübertragung umfasst.

11. Verwendung der Vorrichtung nach einem der Ansprüche 1 bis 10 für den Erhalt von 360°-Bildern durch digitales Verbinden von drei Bildern, die jeweils von den drei optischen Gruppen (2, 3, 4) der Vorrichtung (1) aufgenommen wurden.

12. Verwendung der Vorrichtung nach einem der Ansprüche 1 bis 10 als Webcam.

## Claims

1. Optical device (1) for image capture, according to a 360° field, by digital stitching of three images comprising three lenses (2, 3, 4) with a longitudinal axis (20, 30, 40) for the respective acquisitions of said three images, each optical group (2, 3, 4) having a head lens (21, 31, 41) followed, on the same optical axis (20, 30, 40) of said optical group, by several lenses (211, 311, 411) in order to project the rays transmitted to an image sensor (22, 32, 42), said three optical groups (2, 3, 4) being interlinked together about an imaginary rotation axis (5) for them, and in which, in the direction of said imaginary rotation axis (5), the optical groups are positioned overlapping in a triangular geometric configuration, the longitudinal axis (20, 30, 40) of each optical group being inclined with respect to a plane orthogonal to said imaginary rotation axis so as to enable said optical groups to be interlinked.

2. Device according to claim 1, in which the relative positions of the three optical groups (2, 3, 4) are obtained by successive rotations through 120°, on said imaginary rotation axis (5.

3. Device according to claim 1 or 2, in which the angle of inclination between the longitudinal axis (20, 30, 40) of each optical group (2, 3, 4) and said plane orthogonal to said imaginary rotation axis (5) is between 15° and 30°.

4. Device according to one of claims 1 to 3, in which the head lens (21, 31, 41) of one of the optical groups (2, 3, 4) is positioned overlapping the rear part of another of said optical groups (2, 3, 4).

5. Device according to one of claims 1 to 4, portable, comprising a casing (6) integrating the three optical groups (2, 3, 4) as well as control electronics (8).

6. Device according to claim 5, having a face (7) of said casing on which said device (1) can rest on a horizontal surface while positioning said imaginary rotary axis (5) vertically, said head lens (21, 31, 41) of the optical groups (2, 3, 4) oriented upwards.

7. Device according to claim 6, in which the control electronics (8) are positioned below said optical groups (2, 3, 4) when the device (1) is resting on said horizontal surface by means of said face (7) of said casing.

8. Device according to one of claims 5 to 7, in which the control electronics (8) have a memory for storing the images taken by said optical groups (2, 3, 4).

9. Device according to claim 5 or 8, in which the casing integrates a power supply source.

10. Device according one of claims 5 to 9, having a connection for data transmission.

11. Use of the device according to one of claims 1 to 10 for obtaining 360° images by digital stitching of three images acquired respectively by the three optical groups (2, 3, 4) of said device (1).

12. Use of the device according to one of claims 1 to 10 as a webcam.
